# EUROPEAN PATENT APPLICATION

(11) **EP 4 389 284 A1**
(43) Date of publication of application: **26.06.2024**
(21) Application number: 23177264.1
(22) Date of filing: 05.06.2023
(51) Int. Cl.: B01L 3/02

(54) **MULTIFUNCTIONAL PIPETTE AND AUTOMATIC DETECTION MACHINE**

(30) Priority: 22.12.2022 TW 111149577
(71) Applicant: Wistron Corporation, New Taipei City 22181 (TW)
(72) Inventor: CHANG, Chih-Chen, 22181 New Taipei City (TW); CHU, Chih-Ying, 22181 New Taipei City (TW); LIN, Chih-Kuan, 22181 New Taipei City (TW)
(74) Representative: Viering, Jentschura & Partner mbB Patent- und Rechtsanwälte

(57) **Abstract**

A multifunctional pipette (42) includes a pipette module (1), a heater module (2) and a magnetic module (3). The pipette module (1) includes one or more pipette heads (13). The heater module (2) has a first joint part (2121), and the heater module (2) configured to removably connect to the pipette module (1) by coupling the first joint part (2121) to at least one of the plurality of pipette heads (13). The magnetic module (3) has a second joint part (311; 331; 3521), and the magnetic module (3) configured to removably connect to the pipette module (1) by coupling the second joint part (311; 331; 3521) to at least one of the plurality of pipette heads (13). The multifunctional pipette (42) can be further applied in an automatic detection machine (4).

## Description

### BACKGROUND

### Technical Field

The present disclosure relates to a pipetting device, and in particular to a multifunctional pipette and an automatic detection machine.

### Related Art

In a detection experiment, pipettes are widely used by people to draw up a small volume of liquid and drop it into an experimental vessel. Thus, the pipette is an indispensable experimental instrument for laboratory workers to perform various experiments. Besides, in the laboratory analysis process, in addition to drawing up and dispensing liquid with the pipette, stirring, heating, mixing, magnetic suction and other actions may also be required, so many tools or instruments are often needed to help complete the actions required in the whole laboratory analysis process.

However, when the number of specimens to be detected increases, the manual method of laboratory analysis will be challenged. Therefore, how to develop an automatic detection device to meet the requirements of various detection experiments will be a problem that all parties will strive to solve.

### SUMMARY

In an embodiment, a multifunctional pipette includes: a pipette module, a heater module and a magnetic module. The pipette module has a plurality of pipette heads. The heater module has a first joint part. The heater module configured to removably connect to the pipette module by coupling the first joint part to at least one of the plurality of pipette heads.

The magnetic module has a second joint part, and the magnetic module configured to removably connect to the pipette module by coupling the second joint part to at least one of the plurality of pipette heads.

In an embodiment, an automatic detection machine includes: a detection platform, a multifunctional pipette, a moving mechanism and a receiving base. The detection platform has a plurality of working areas. The multifunctional pipette includes: a pipette module, a heater module and a magnetic module. The moving mechanism is connected to the multifunctional pipette and configured to drive the multifunctional pipette to move between the working areas. The receiving base is located in one of the plurality of working areas and is configured to receive the heater module or the magnetic module.

The pipette module has a plurality of pipette heads. The heater module has a first joint part. The heater module configured to removably connect to the pipette module by coupling the first joint part to at least one of the plurality of pipette heads.

The magnetic module has a second joint part, and the magnetic module configured to removably connect to the pipette module by coupling the second joint part to at least one of the plurality of pipette heads.

### BRIEF DESCRIPTION OF THE DRAWINGS

FIG. 1 is a schematic outside view of a multifunctional pipette in a first application state;
FIG. 2 is a schematic inside view of a pipette module in FIG. 1;
FIG. 3 is a functional block diagram of a heater module in FIG. 1;
FIG. 4 is a schematic enlarged view of the heater module in FIG. 1;
FIG. 5 is a schematic outside view of the multifunctional pipette in a second application state;
FIG. 6 is a schematic outside view of the multifunctional pipette in the second application state;
FIG. 7 is a schematic outside view of the multifunctional pipette in the second application state;
FIG. 8 is a functional block diagram of a magnetic module in FIG. 7;
FIG. 9 is a schematic enlarged view of the magnetic module in FIG. 7;
FIG. 10 is a schematic inside view of the pipette module in FIG. 1 to FIG. 2 and FIG. 5 to FIG. 7;
FIG. 11 is a schematic back view of the pipette module in FIG. 10;
FIG. 12 is a schematic exploded view of the pipette module in FIG. 10;
FIG. 13 is a schematic view of an automatic detection machine of an embodiment;
FIG. 14 is a schematic exploded view of a receiving base in FIG. 13;
FIG. 15 is a schematic view of the multifunctional pipette of a manual type; and
FIG. 16 is a schematic outside view of the multifunctional pipette in a third application state.

### DETAILED DESCRIPTION

In some embodiments, the multifunctional pipette 42 includes: a pipette module 1, a heater module 2 and a magnetic module 3. When the heater module 2 is not connected to the pipette module 1, the magnetic module 3 is removably connected to the pipette module 1 according to needs. When the magnetic module 3 is not connected to the pipette module 1, the heater module 2 is removably connected to the pipette module 1 according to needs.

The multifunctional pipette 42 has three application states (hereinafter referred to as a first application state, a second application state and a third application state respectively). In the first application state, the multifunctional pipette 42 has a function of heating. In the second application state, the multifunctional pipette 42 has functions of providing magnetic force and stirring. In the third application state, the multifunctional pipette 42 has a function of transferring liquid.

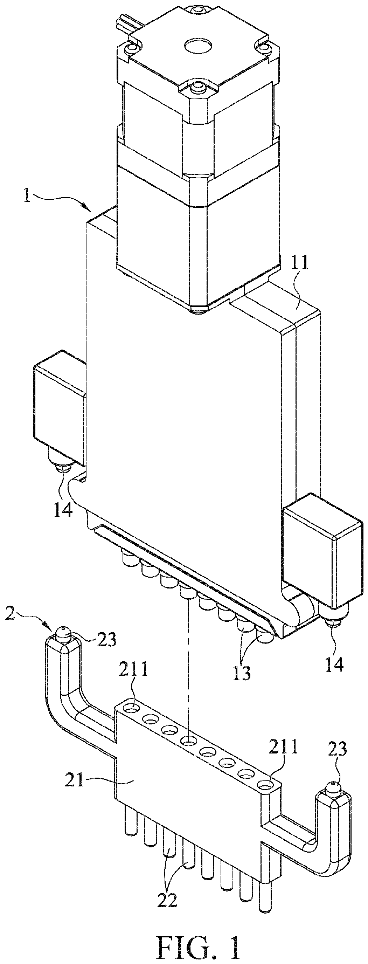

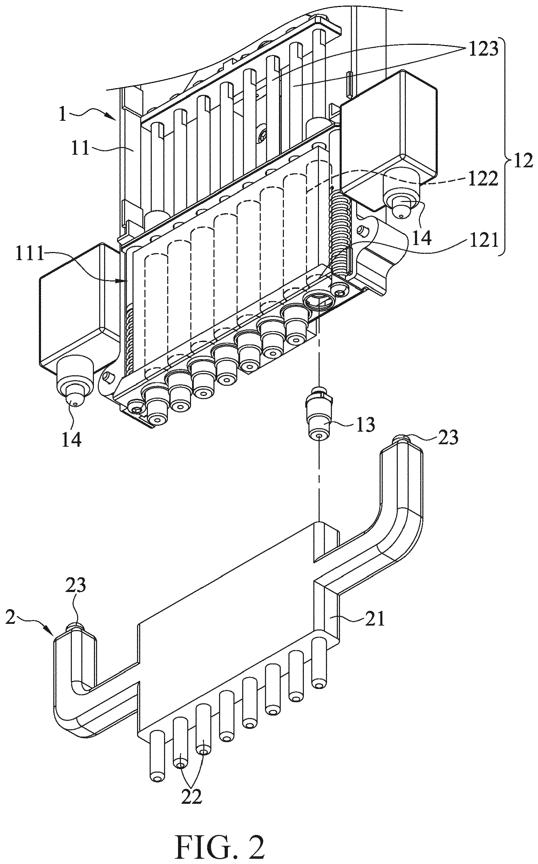

The first application state will be described here. A multifunctional pipette 42 includes: a pipette module 1 and a heater module 2 (as shown in FIG. 1 and FIG. 2, the part where the heater module 2 is mounted to the pipette module 1 is shown in the form of an exploded view).

The pipette module 1 includes: a plurality of pipette heads 13, a plurality of piston assemblies 12 and a pipette shell 11.

The pipette heads 13 respectively correspond to the piston assemblies 12, and each of the pipette heads 13 is arranged at one end of the corresponding piston assembly 12. Besides, the number of the piston assemblies 12 is the same as that of the pipette heads 13. It should be understood that although FIG. 1 shows 8 piston assemblies 12 and 8 pipette heads 13, the number of the piston assemblies 12 and the pipette heads 13 may be modified to other numbers according to actual requirements, such as 2, 3, 4, 5, 6, 7, 8 or more.

Referring to FIG. 1 and FIG. 2, the piston assemblies 12 include a plurality of air channels 122 and a plurality of piston rods 123. The piston rod 123 may be inserted into the air channel 122 from a first end of the air channel 122 and is removable in axially reciprocating manner in the corresponding air channel 122. A second end of the air channel 122 has an opening 121, and the opening 121 is connected to the corresponding pipette head 13. In other words, each of the piston assemblies 12 is coupled to the corresponding pipette head 13. Here, when the piston rod 123 reciprocates in the air channel 122, i.e., when the piston operates, the piston assembly 12 can draw liquid into a micropipette 5 or dispense the liquid out of the micropipette tip 5.

In some embodiments, the air channels 122 of all the piston assemblies 12 can be integrated into a cylinder 111 (as shown in FIG. 2, the cylinder 111 is located in the pipette shell 11). The air channels 122 are located inside the cylinder 111 in parallel at intervals, and each of the air channels 122 runs through the cylinder 111 from top to bottom, so that the first end of each of the air channels 122 forms one opening on an upper surface of the cylinder 111 and the second end of each of the air channels 122 forms the other opening 121 on a lower surface of the cylinder 111. The opening 121 is arranged close to one side of the pipette shell 11. The pipette heads 13 are fixedly arranged on the pipette shell 11.

Here, the heater module 2 includes: a first joint part 2121, a plurality of power supply terminals 14, a plurality of heating rods 22, a plurality of first connecting terminals 23 and a heat-resistant shell 21.

In some embodiments, the heater module 2 configured to removably connect to the pipette module 1 by coupling the first joint part 2121 to at least one of the plurality of pipette heads 13. In detail, the plurality of pipette heads 13 define a plurality of first recessed parts 211 opposite to the plurality of pipette heads 13. The first joint part 2121 has the plurality of first recessed parts 211 opposite to the pipette heads 13. The plurality of first recessed parts 211 are respectively matched with the plurality of corresponding pipette heads 13. Specifically, the distribution positions of the first recessed parts 211 are the same as the relative distribution positions of the corresponding pipette heads 13 on the pipette shell 11, so that when the pipette module 1 and the heater module 2 are close to each other, the plurality of pipette heads 13 can be respectively and correspondingly inserted into the respective first recessed parts 211. The first recessed part 211 is used to accommodate the pipette head 13. The first recessed part 211 is configured to limit the pipette head 13. For example, an inner surface of the first recessed part 211 is concave, which can avoid the offset of the heater module 2 assembled on the pipette module 1, i.e., when the heater module 2 is assembled on the pipette module 1, a central axis of each of the first recessed parts 211 coincides with a central axis of any pipette head 13.

In some embodiments, the number of the first recessed parts 211 may be equal to or less than that of the pipette heads 13. When the pipette heads 13 are coupled to the first recessed parts 211 one to one, the number of the pipette heads 13 and the number of the first recessed parts 211 are preferably each two or more.

The power supply terminals 14 are embedded in the pipette shell 11. The power supply terminals 14 and the pipette heads 13 face the same direction. As shown in FIG. 1 and FIG. 2, they all face the heater module 2. In some embodiments, the power supply terminals 14 include a positive contact and a negative contact.

The first joint part 2121 is located at one side of the heat-resistant shell 21. The first joint part 2121 and the plurality of heating rods 22 are arranged at different sides of the heat-resistant shell 21. Preferably, the first joint part 2121 are arranged opposite to the plurality of heating rods 22. Besides, the plurality of first connecting terminals 23 are embedded in the heat-resistant shell 21, and the first connecting terminals 23 respectively correspond to the plurality of power supply terminals 14 and are electrically connected to the plurality of heating rods 22. The first connecting terminals 23 and the first joint part 2121 face the same direction.

Here, the heating rods 22 are respectively aligned with the first recessed parts 211. Specifically, a central axis of each of the heating rods 22 runs through a center point of the corresponding first recessed part 211. In some embodiments, the number of the heating rods 22 may be equal to or less than that of the pipette heads 13.

It should be understood that although FIG. 1, FIG. 2 and FIG. 4 show eight first recessed parts 211 and eight heating rods 22, the number of the first recessed parts 211 and the number of the heating rods 22 may be adaptively modified into other numbers according to actual requirements, such as 1, 2, 3, 4, 5, 6, 7, 8 or more.

The heat-resistant shell 21 further includes a fixed base 212 and at least two extending arms 213. The fixed base 212 includes the first surface, a second surface 2122, a third surface 2123 and a fourth surface 2124. The first surface is the first joint part 2121. Specifically, the first joint part 2121 and the second surface 2122 are arranged opposite to each other, and the third surface 2123 and the fourth surface 2124 are respectively connected between the first joint part 2121 and the second surface 2122. The plurality of heating rods 22 run through the second surface 2122. In some embodiments, the number of the extending arms 213 is two. One end of one of the extending arms 213 is connected to the third surface 2123, and one end of the other extending arm 213 is connected to the fourth surface 2124. The other end of each of the extending arms 213 and the first joint part 2121 face the same direction. As shown in FIG. 1 and FIG. 2, they both face the pipette module 1. Each of the first connecting terminals 23 is located at an end surface of the other end of the extending arm 213. In some embodiments, the three-dimensional shape of the extending arm 213 is substantially an L shape.

In some embodiments, a tolerable temperature (i.e., a temperature that does not cause a change in the material of the heat-resistant shell 21) of the heat-resistant shell 21 is greater than a heating temperature of the heating rods 22.

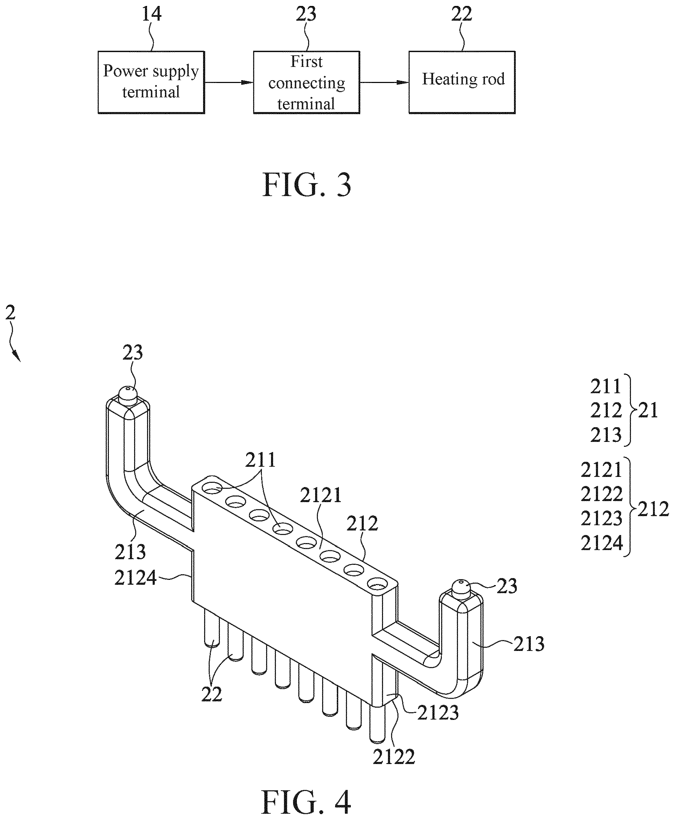

Here, when the heater module 2 is removably assembled onto the pipette module 1 through the first recessed parts 211 being sleeved on the pipette heads 13, the plurality of first connecting terminals 23 are respectively electrically connected to the plurality of power supply terminals 14 (as shown in FIG. 3).

The pipette heads 13 are inserted and snapped into the corresponding first recessed parts 211, so that the heater module 2 is assembled onto the pipette module 1 and an electrical contact of each of the power supply terminals 14 is attached and electrically connected to an electrical contact of the corresponding first connecting terminal 23. Therefore, in the first application state, the pipette module 1 can drive the heating rods 22 on the heater module 2 through the electrical connection between the power supply terminal 14 and the first connecting terminal 23, so that the heating rods 22 generate heat.

When liquid transfer is needed, the pipette heads 13 of the pipette module 1 are sleeved with the micropipette tips 5, so that the liquid can be drawn into the micropipette tips 5 or dispensed out of the micropipette tips 5 through the piston assemblies 12. When heating is needed, the micropipette tips 5 sleeved on the pipette heads 13 can be removed and the first recessed parts 211 are sleeved on the pipette heads, so that the heater module 2 is assembled onto the pipette module 1. Similarly, when the liquid transfer is needed again, the heater module 2 sleeved on the pipette heads 13 is removed, and the micropipette tips 5 with required size are sleeved on the pipette heads again.

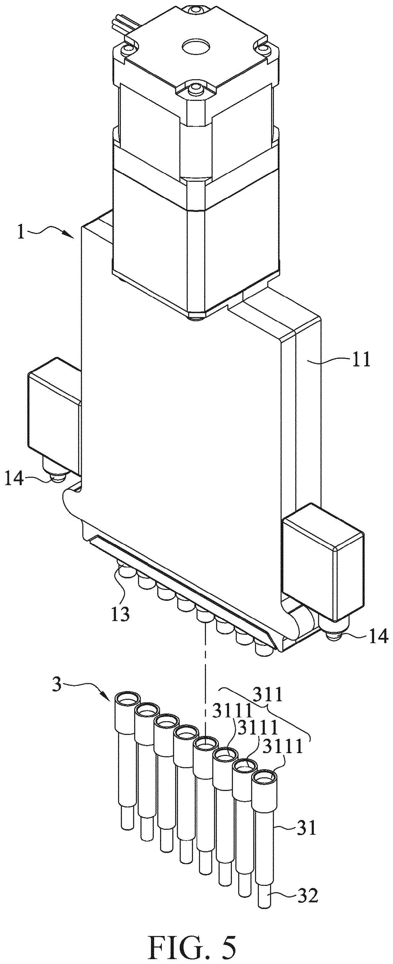

The second application state will be described here. The part of the magnetic module 3 mounted to the pipette module 1 is shown in the form of exploded views (as shown in FIG. 5 to FIG.

8). Referring to FIG. 5, the magnetic module 3 includes a second joint part 311. The magnetic module 3 configured to removably connect to the pipette module 1 by coupling the second j oint part 311 to at least one of the plurality of pipette heads 13. Here, the structure and function of the pipette module 1 are basically the same as those of any of the aforementioned embodiments, and thus will not be described again. The magnetic module 3 includes: eight connecting sleeves 31 and eight permanent magnet rods 32. The connecting sleeves 31 include the second joint part 311. The second joint part 311 includes eight sleeve recessed parts 3111, and the sleeve recessed parts 3111 are respectively located at one end of the connecting sleeves 31. The eight pipette heads 13 define the eight sleeve recessed parts 3111 opposite to the pipette heads 13. The eight sleeve recessed parts 3111 are respectively matched with the corresponding eight pipette heads 13. A central axis of each of the connecting sleeves 31 coincides with a central axis of any pipette head 13, so that when the pipette module 1 and the magnetic module 3 are close to each other, the pipette heads 13 can be inserted into the corresponding sleeve recessed parts 3111 one to one. The sleeve recessed part 3111 is used to accommodate the pipette head 13. Besides, the eight permanent magnet rods 32 are respectively arranged at the other ends of the corresponding eight connecting sleeves 31.

In some embodiments, the number of the connecting sleeves 31 may be equal to or less than that of the pipette heads 13.

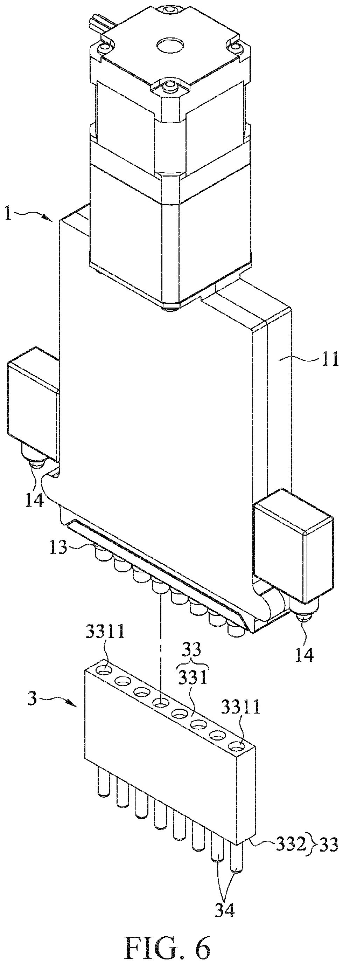

In some embodiments, referring to FIG. 6, the magnetic module 3 includes: a fixed base 33 and eight permanent magnet rods 34. The fixed base 33 includes the second joint part 331 and a second surface 332 opposite to each other. The eight pipette heads 13 define the eight second recessed parts 3311 opposite to the eight pipette heads 13. The second joint part 331 has the eight second recessed parts 3311, and the second recessed parts 3311 are matched with and sleeved on the corresponding pipette heads 13. The eight permanent magnet rods 34 run through the second surface 332, and the eight permanent magnet rods 34 are respectively aligned with the eight second recessed parts 3311. A central axis of each of the eight pipette heads 13 coincides with a central axis of any of the second recessed parts 3311. Specifically, the distribution positions of the second recessed parts 3311 on the fixed base 33 are the same as the relative distribution positions of the corresponding pipette heads 13 on the pipette shell 11, so that when the pipette module 1 and the magnetic module 3 are close to each other, the pipette heads 13 can be inserted into the corresponding second recessed parts 3311 one to one. The second recessed part 3311 is used to accommodate the pipette head 13. In some embodiments, the number of the second recessed parts 3311 may be equal to or less than that of the pipette heads 13.

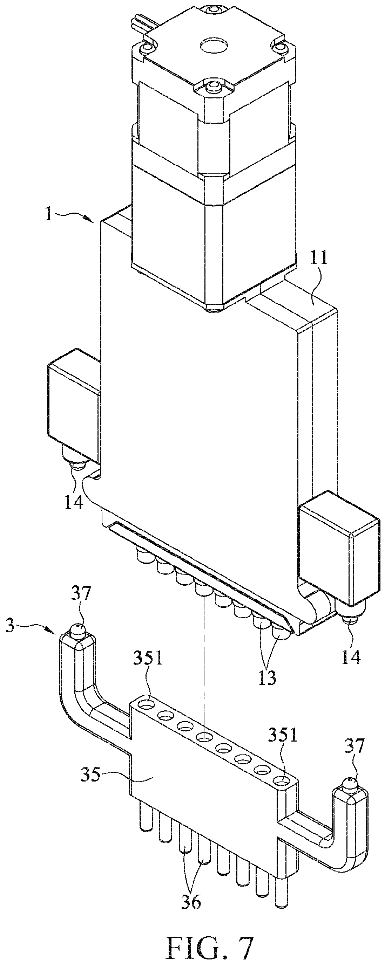

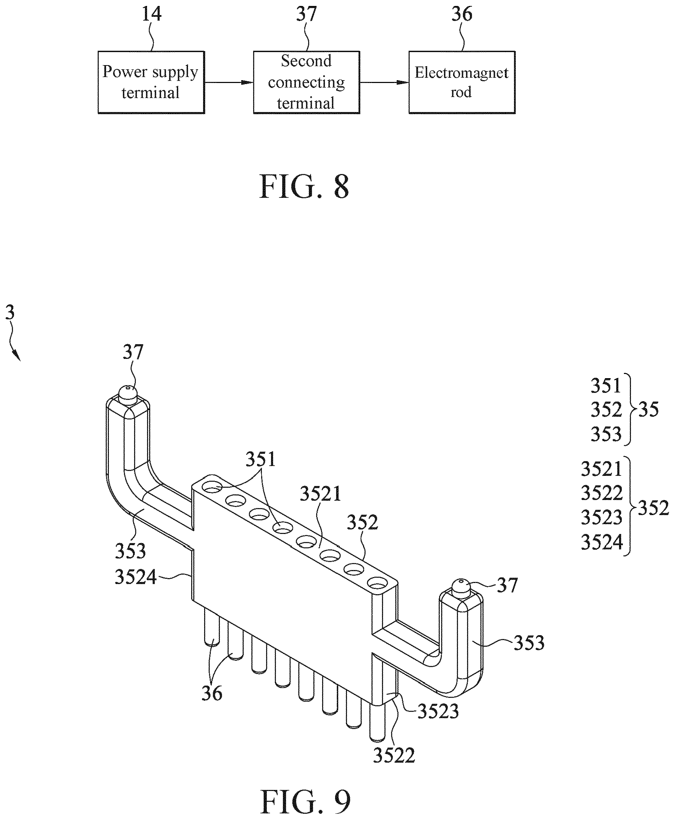

In some embodiments, referring to FIG. 7 and FIG. 9, the magnetic module 3 includes: eight second recessed parts 351 located at the second joint part 3521, two power supply terminals 14 arranged on the pipette shell 11, eight electromagnet rods 36 arranged opposite to the second joint part 3521, and two second connecting terminals 37. The eight pipette heads 13 define the eight second recessed parts 351 opposite to the eight pipette heads 13. The second connecting terminals 37 respectively correspond to the power supply terminals 14 and are electrically connected to the electromagnet rods 36. Electrical contacts of the second connecting terminals 37 may be attached and electrically connected to electrical contacts of the corresponding power supply terminals 14. Here, when the magnetic module 3 is removably assembled onto the pipette module 1 through the eight second recessed parts 351 being sleeved on the eight pipette heads 13, the two second connecting terminals 37 are respectively electrically connected to the two power supply terminals 14. The second connecting terminals 37 and the second joint part 3521 face the same direction. Besides, the distribution positions of the second recessed parts 351 on a connecting shell 35 are the same as the relative distribution positions of the corresponding pipette heads 13 on the pipette shell 11, so that when the pipette module 1 and the magnetic module 3 are close to each other, the pipette heads 13 can be inserted into the corresponding second recessed parts 351 one to one. The second recessed part 351 is used to accommodate the pipette head 13.

The second recessed parts 3311, 351 (and the sleeve recessed parts 3111) are configured to limit the pipette heads 13. For example, an inner surface of the second recessed parts 3311, 351 (and sleeve recessed parts 3111) is concave, which can avoid the offset of the magnetic module 3 assembled on the pipette module 1, i.e., when the magnetic module 3 is assembled on the pipette module 1, a central axis of each of the second recessed parts 3311, 351 (and sleeve recessed parts 3111) coincides with a central axis of any pipette head 13.

In some embodiments, the number of the second recessed parts 3311, 351 (and sleeve recessed parts 3111)/or the number of the electromagnet rods 36 may be equal to or less than the number of the pipette heads 13. Although the figures show eight second recessed parts 3311, 351 (and sleeve recessed parts 3111) and eight electromagnet rods 36, the number of the second recessed parts 3311, 351 (and sleeve recessed parts 3111) and the number of the electromagnet rods 36 may be adaptively modified into other numbers according to actual requirements, such as 1, 2, 3, 4, 5, 6, 7, 8 or more.

The magnetic module 3 further includes the connecting shell 35. The eight electromagnet rods 36 are arranged at the other side of the connecting shell 35 and respectively aligned with the eight second recessed parts 351. The two second connecting terminals 37 are embedded in the connecting shell 35 and respectively electrically connected to the eight electromagnet rods 36.

In some embodiments, referring to FIG. 9, the connecting shell 35 includes: a fixed base 352 and two extending arms 353. The fixed base 352 includes a first face, a second surface 3522, a third surface 3523 and a fourth surface 3524. The first surface is the second joint part 3521. The second joint part 3521 and the second surface 3522 opposite to each other, and the third surface 3523 and the fourth surface 3524 connected between the second joint part 3521 and the second surface 3522. The eight second recessed parts 351 are arranged on the second joint part 3521, and the eight electromagnet rods 36 run through the second surface 3522. One end of one of the extending arms 353 is connected to the third surface 3523, and one end of the other extending arm 353 is connected to the fourth surface 3524. The other end of each of the extending arms 353 and the second joint part 3521 face the same direction. Each of the second connecting terminals 37 is located at an end surface of the other end of the extending arm 353. In some embodiments, the three-dimensional shape of the extending arm 353 is substantially an L shape.

Therefore, in the second application state, the magnetic module 3 is removably connected to the pipette module 1 through the second joint part 311, 331, 3521 being coupled to at least one of the plurality of pipette heads 13, so that the multifunctional pipette 42 has the functions of providing magnetic force and stirring. In one embodiment, the permanent magnet rod 32 is arranged at the other end of the corresponding connecting sleeve 31, so that the pipette module 1 connected with the magnetic module 3 has the functions of providing required magnetic force and stirring (as shown in FIG. 5). In another embodiment, the permanent magnet rod 34 is arranged on the fixed base 33 and coupled to the pipette head 13 via the second joint part 331 of the fixed base 33, so that the pipette module 1 connected with the magnetic module 3 has the functions of providing required magnetic force and stirring (as shown in FIG. 6). In still another embodiment, the pipette module 1 can be used to drive the electromagnet rod 36 on the magnetic module 3 through the power supply terminal 14 being electrically connected to the second connecting terminal 37, so that the electromagnet rod 36 produces a magnetic field (as shown in FIG. 7 and FIG. 8).

When liquid transfer is needed, the pipette heads 13 of the pipette module 1 are sleeved with the micropipette tips 5, so that the liquid can be drawn into the micropipette tips 5 or dispensed out of the micropipette tips 5 through the piston assemblies 12. When a magnetic field is needed in the operation process, the micropipette tips 5 sleeved on the pipette heads 13 can be removed and the second recessed parts 351 (or the second recessed parts 3311, or the sleeve recessed parts 3111) are sleeved on the pipette heads, so that the magnetic module 3 is assembled onto the pipette module 1. Similarly, when the liquid transfer is needed again, the magnetic module 3 sleeved on the pipette heads 13 is removed, and the micropipette tips 5 with required size are sleeved on the pipette heads again.

In some embodiments, the power supply terminal 14 and the first connecting terminal 23 (and the power supply terminal 14 and the second connecting terminal 37) may be realized as a spring probe (or pogo pin) and a guide plate that are matched with each other. For example, when the power supply terminal 14 is the spring probe, the corresponding first connecting terminal 23 (and the corresponding second connecting terminal 37) is the guide plate. On the contrary, when the power supply terminal 14 is the guide plate, the corresponding first connecting terminal 23 (and the corresponding second connecting terminal 37) is the spring probe.

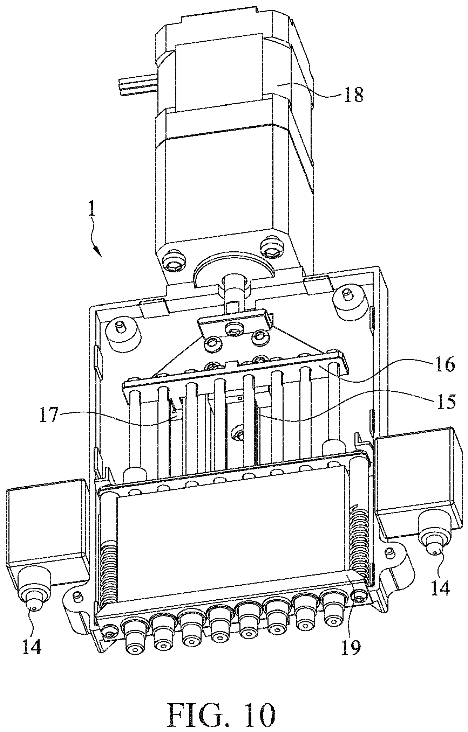

In some embodiments, referring to FIG. 10 to FIG. 12, the pipette module 1 further includes: a linear guide rail 15 and a linkage element 16. The linkage element 16 connects the linear guide rail 15 with the piston assemblies 12. Here, the linkage element 16 is used to drive the piston assemblies 12 to reciprocate along the linear guide rail 15. Specifically, the linkage element 16 is coupled to the piston rods 123 of all the piston assemblies 12. When liquid transfer is needed, the linkage element 16 can simultaneously pull the piston rods 123 of all the piston assemblies 12 out of the air channels 122, so that the multifunctional pipette 42 can draw the liquid up into the micropipette tips 5 mounted thereon; or the linkage element 16 can simultaneously push the piston rods 123 of all the piston assemblies 12 into the air channels 122, so that the multifunctional pipette 42 can dispense the liquid out of the micropipette tips 5 mounted thereon.

In some embodiments, referring to FIG. 10 to FIG. 12, the pipette module 1 further includes: a limit assembly 17. The limit assembly 17 is connected to the linkage element 16. Here, the limit assembly 17 is configured to limit a moving distance of the linkage element 16. Based on this, the multifunctional pipette 42 can accurately control the amount of liquid drawn up or dispensed.

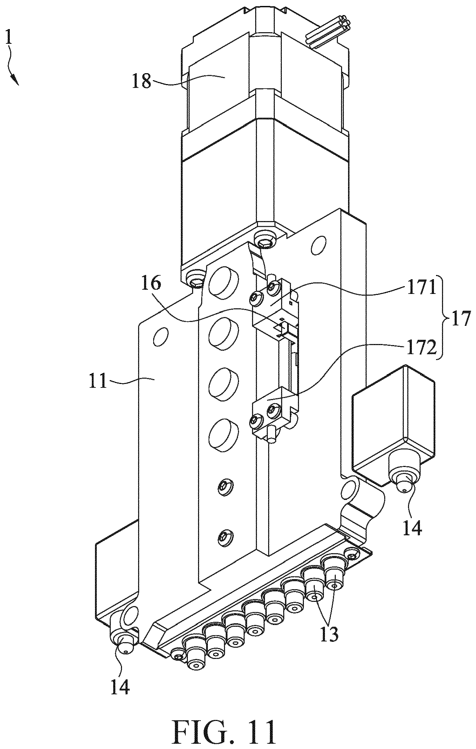

In some embodiments, the limit assembly 17 further includes an upper limit member 171 and a lower limit member 172, as shown in FIG. 11. The upper limit member 171 is located at an upper limit of the moving range of the linkage element 16, and the lower limit member 172 is located at a lower limit of the moving range of the linkage element 16.

In some embodiments, the multifunctional pipette 42 may be an automatic type. Referring to FIG. 10 and FIG. 11, the pipette module 1 further includes: a motor 18. The motor 18 is arranged at one side of the pipette shell 11. Here, the motor 18 can be used to drive the piston assemblies 12.

For example, the motor 18 is coupled to the linkage element 16. When the motor 18 pulls the linkage element 16 away from the pipette heads 13, the linkage element 16 can move from the upper limit member 171 to the lower limit member 172 along the linear guide rail 15, so as to pull the piston rods 123 of all the piston assemblies 12 out of the air channels 122. When the motor 18 pushes the linkage element 16 close to the pipette heads 13, the linkage element 16 can move from the lower limit member 172 to the upper limit member 171 along the linear guide rail 15, so as to push the piston rods 123 of all the piston assemblies 12 into the air channels 122.

In this way, the user can perform liquid transfer by controlling the start of the motor 18.

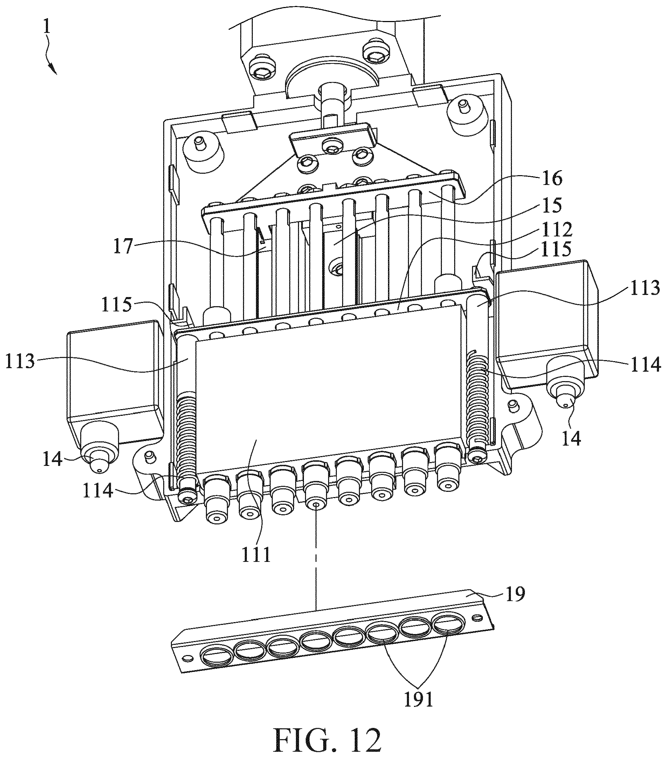

In some embodiments, referring to FIG. 12, the pipette module 1 further includes an exit structure 19, a linking piece 112, two screws 113, two elastic elements 114 and two pushing elements 115.

The exit structure 19 is located beside the pipette heads 13. The exit structure 19 has a plurality of perforations 191, and the number of the perforations 191 is the same as that of the pipette heads 13. The following is an example of eight perforations 191.

The eight perforations 191 are provided in the exit structure 19, and the perforations 191 respectively surround the pipette heads 13. The linking piece 112 is arranged above the cylinder 111. One end of the linking piece 112 is connected to one of the screws 113, and the other end of the linking piece 112 is connected to the other screw 113. The cylinder 111 is arranged between the screws 113. Horizontal positions of the two pushing elements 115 are the same as those of the screws 113. The linking piece 112 is arranged between the pushing elements 115 and the screws 113. The two screws 113 are respectively connected to the exit structure 19. The two elastic elements 114 are respectively elastically arranged on the screws 113. The linking piece 112 is arranged at a position where the piston assemblies 12 reciprocate. The piston assemblies 12 run through the linking piece 112, and the piston assemblies 12 are partially located inside the cylinders 111.

The linkage element 16 drives the eight piston assemblies 12 to reciprocate along the linear guide rail 15. When the linkage element 16 moves to the lower limit member 172 along the linear guide rail 15 and abuts against the linking piece 112, the linking piece 112 links the screws 113 and moves the screws 113 toward the exit structure 19. At this time, since the exit structure 19 is coupled to one end of the screw 113, the exit structure 19 may be separated from the pipette shell 11 due to the movement of the screw 113, so as to push the object (for example, the micropipette tips 5, the heater module 2 or the magnetic module 3) snapped on the pipette heads 13 away from the pipette heads 13. At this time, the elastic elements 114 are squeezed by the movement of the screws 113, so that the elastic elements 114 store elastic potential energy.

When the linkage element 16 moves away from the lower limit member 172 along the linear guide rail 15 and no longer abuts against the linking piece 112, the elastic potential energy stored by the elastic elements 114 is converted into kinetic energy of the object, so that the screws 113 are moved toward the pushing elements 115 and abut against the pushing elements 115. At this time, due to the movement of the screws 113, the exit structure 19 connected with the screws 113 is moved toward the pipette shell 11 and abuts against the pipette shell 11. At this time, the exit structure 19 is located beside the pipette heads 13.

In some embodiments, the multifunctional pipette 42 of an automatic type may be applied to an automatic detection machine 4.

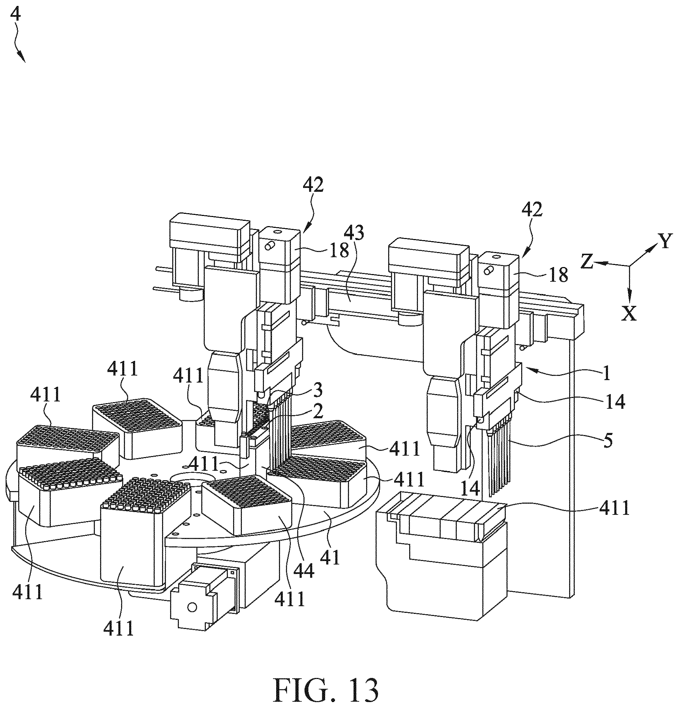

In some embodiments, referring to FIG. 13, the automatic detection machine 4 includes a detection platform 41, a multifunctional pipette 42, a moving mechanism 43 and a receiving base 44. The detection platform 41 has a plurality of working areas 411. The moving mechanism 43 is connected to the multifunctional pipette 42 and configured to drive the multifunctional pipette 42 to move between the working areas 411. In some embodiments, the moving mechanism 43 drives the multifunctional pipette 42 to move in an X-axis direction, a Y-axis direction and/or a Z-axis direction. Here, the structure and function of the multifunctional pipette 42 are basically the same as those of any of the aforementioned embodiments, and thus will not be described again. In addition, the automatic detection machine 4 is also equipped with a computer device.

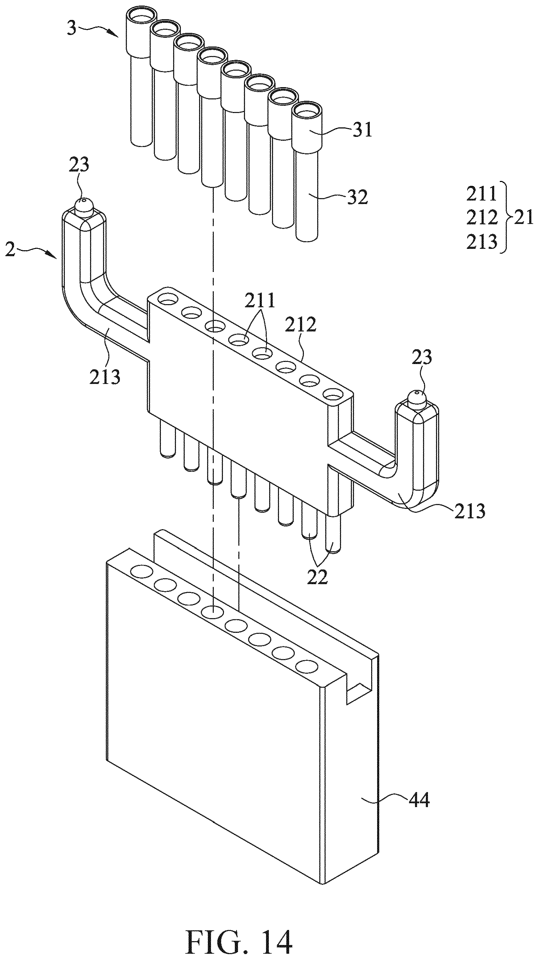

In some embodiments, the automatic detection machine 4 further includes a receiving base 44. The following is an example of 10 working areas 411. The receiving base 44 is located in one of the 10 working areas 411. The receiving base 44 can receive the heater module 2 and/or the magnetic module 3, as shown in FIG. 14.

It should be understood that the number of the working areas 411 is not limited by the disclosure, but may be adaptively modified into other numbers according to actual requirements.

For example, in an experiment that the automatic detection machine 4 is applied to DNA (deoxyribonucleic acid) purification, when a well plate is placed in one of the working areas 411 of the detection platform 41, the detection platform 41 is rotated to move the well plate to below the multifunctional pipette 42 assembled with the heater module 2, that is, the axis direction (X-axis direction) of the multifunctional pipette 42 assembled with the heater module 2 is perpendicular to this working area 411. The heater module 2 is used to heat a sample in the well plate to a target temperature. The heater module 2 heats the sample to denature the double-stranded DNA so as to generate single-stranded DNA, and the single-stranded DNA obtained by purification is applied to subsequent experimental analysis. Besides, the heater module 2 is used to keep the sample in the well plate at a target temperature such that the sample remains at the target temperature for subsequent experiments.

When the well plate is placed in one of the working areas 411 of the detection platform 41, the detection platform 41 is rotated to move the well plate to below the multifunctional pipette 42 assembled with the magnetic module 3. When magnetic beads are added to the sample in the well plate and the magnetic beads adsorb the target DNA, the magnetic module 3 provides magnetic force to attract the magnetic beads with the target DNA, which facilitates the retention of the target DNA in the purification step. Besides, while the magnetic module 3 provides magnetic force to attract the magnetic beads with the target DNA, the moving mechanism 43 drives the multifunctional pipette 42 assembled with the magnetic module 3 to another working area 411, so that the magnetic beads with the target DNA attracted by the magnetic module 3 are moved to the another working area 411.

When the well plate is placed in one of the working areas 411 of the detection platform 41, the detection platform 41 is rotated to move the working area 411 to below the multifunctional pipette 42 assembled with the magnetic module 3. The magnetic module 3 provides magnetic force to vibrate or stir the sample and an analytical solution in the well plate, so that the sample and the analytical solution are shaken and mixed.

In an embodiment, in an optimization evaluation of the overall machine volume, compared with the traditional machine having a volume of 86×75×60 cm³, in the automatic detection machine 4 of the foregoing embodiment, the heater module 2 and the magnetic module 3 are removably assembled to the pipette module 1 according to needs, so that the volume of the automatic detection machine 4 is reduced to 73×75×50 cm³. In other words, compared with the volume of the traditional machine, the volume of the automatic detection machine 4 of the foregoing embodiment is reduced by 29% of the machine volume.

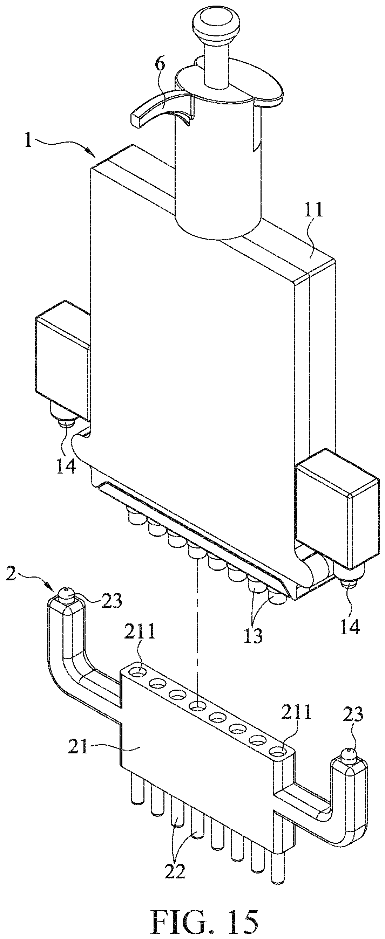

In some embodiments, the multifunctional pipette 42 may be a manual type. Referring to FIG. 15, the pipette shell 11 is coupled with a holding part 6 on a side opposite to the pipette heads 13. The user can hold the holding part 6 with a hand, control the pistons of the pistons assemblies 12 to operate and control the driving of the heater module 2 (and the magnetic module 3), so that the user can hold the machine from the outside and use the multifunctional pipette 42.

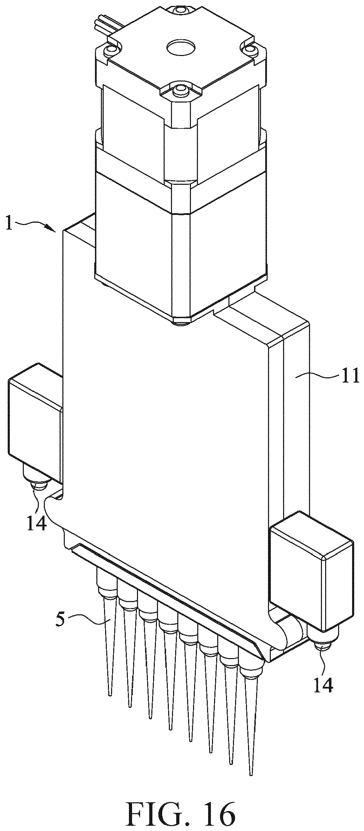

The third application state will be described here. The pipette heads 13 of the pipette module 1 are removably assembled with micropipette tips 5 of various sizes, as shown in FIG. 16. When the pipette heads 13 are sleeved with the micropipette tips 5, the operation of the pistons of the piston assemblies 12 can draw up liquid outside the micropipette tips 5 into the micropipette tips 5, or dispense the liquid inside the micropipette tips 5 out of the micropipette tips 5. As understood by those of ordinary skill in the art to which the present disclosure belongs, the micropipette tips 5 are commercially available. In detail, when liquid transfer is needed, the linkage element 16 can simultaneously pull the piston rods 123 of all the piston assemblies 12 out of the air channels 122, so that the multifunctional pipette 42 can draw the liquid up into the micropipette tips 5 mounted thereon; or the linkage element 16 can simultaneously push the piston rods 123 of all the piston assemblies 12 into the air channels 122, so that the multifunctional pipette 42 can dispense the liquid out of the micropipette tips 5 mounted thereon.

Based on the above, according to some embodiments, the multifunctional pipette 42 can heat the specimen by being assembled with the heater module 2, or provide magnetic force or shake or stir the specimen by being assembled with the magnetic module 3. According to some embodiments, the multifunctional pipette 42 can be applied in an automatic detection machine 4, and can be driven by the moving mechanism 43 to perform automatic assembly and replacement so as to realize multiple functions of the multifunctional pipette 42, which can facilitate automatic operation.

## Claims

1. A multifunctional pipette (42), comprising:
a pipette module (1), having a plurality of pipette heads (13);
a heater module (2), having a first joint part (2121), the heater module (2) configured to removably connect to the pipette module (1) by coupling the first joint part (2121) to at least one of the plurality of pipette heads (13); and
a magnetic module (3), having a second joint part (311; 331; 3521), the magnetic module (3) configured to removably connect to the pipette module (1) by coupling the second joint part (311; 331; 3521) to at least one of the plurality of pipette heads (13).

2. The multifunctional pipette (42) according to claim 1, wherein the pipette module (1) further comprises:
a plurality of piston assemblies (12), comprising a plurality of air channels (122) and a plurality of piston rods (123);
wherein one end of each of the plurality of air channels (122) has an opening (121);
wherein each of the plurality of piston rods (123) is inserted into each of the air channels (122) from the other end of each of the plurality of air channels (122) and is removable in axially reciprocating manner in the corresponding air channel (122);
wherein each of the piston assemblies (12) is coupled to the corresponding pipette head (13) via the opening (121).

3. The multifunctional pipette (42) according to claim 2, wherein the pipette module (1) further comprises:
a pipette shell (11), wherein the plurality of piston assemblies (12) are located in the pipette shell (11), the openings (121) of the plurality of piston assemblies (12) are arranged close to one side of the pipette shell (11), and the pipette heads (13) are fixedly arranged on the pipette shell (11); and
a motor (18), arranged at one side of the pipette shell (11) and configured to drive the plurality of piston assemblies (12).

4. The multifunctional pipette (42) according to any of claims 1-3, wherein the first joint part (2121) has a plurality of first recessed parts (211) opposite to the pipette heads (13), and each of the plurality of first recessed parts (211) is matched with the corresponding pipette head (13).

5. The multifunctional pipette (42) according to any of claims 3-4, wherein the heater module (2) further comprises:
a plurality of power supply terminals (14), arranged on the pipette shell (11);
a plurality of heating rods (22); and
a plurality of first connecting terminals (23), respectively corresponding to the plurality of power supply terminals (14) and electrically connected to the plurality of heating rods (22).

6. The multifunctional pipette (42) according to claim 5, wherein when the heater module (2) accommodates one of the plurality of pipette heads (13) through at least one of the plurality of first recessed parts (211), and the plurality of first connecting terminals (23) are respectively electrically connected to the plurality of power supply terminals (14).

7. The multifunctional pipette (42) according to any of claims 5-6, wherein the heater module (2) further comprises a heat-resistant shell (21), the first joint part (2121) is located on one side of the heat-resistant shell (21), the plurality of heating rods (22) are arranged opposite to the first joint part (2121), the plurality of first connecting terminals (23) are embedded in the heat-resistant shell (21), and the plurality of first connecting terminals (23) and the first joint part (2121) face the same direction.

8. The multifunctional pipette (42) according to claim 7, wherein the heat-resistant shell (21) comprises:
a fixed base (212), comprising a first surface, a second surface (2122), a third surface (2123) and a fourth surface (2124), wherein the first surface is the first joint part (2121), the first joint part (2121) and the second surface (2122) opposite to each other, the third surface (2123) and the fourth surface (2124) connected between the first joint part (2121) and the second surface (2122), the plurality of heating rods (22) run through the second surface (2122), and the plurality of heating rods (22) are respectively aligned with the plurality of first recessed parts (211); and
at least two extending arms (213), wherein one end of at least one of the plurality of extending arms (213) is connected to the third surface (2123), one end of at least another one of the plurality of extending arms (213) is connected to the fourth surface (2124), and the other end of each of the plurality of extending arms (213) faces the same direction as the first joint part (2121), and the plurality of first connecting terminals (23) are respectively located at end surfaces of the other ends of the plurality of extending arms (213).

9. The multifunctional pipette (42) according to any of claims 1-8, wherein the magnetic module (3) comprises:
a plurality of connecting sleeves (31), having the second joint part (311), wherein the second joint part (311) comprises a plurality of sleeve recessed parts (3111), the plurality of sleeve recessed parts (3111) are respectively located at one ends of the plurality of connecting sleeves (31), the plurality of sleeve recessed parts (3111) opposite to the plurality of pipette heads (13), and each of the plurality of sleeve recessed parts (3111) is matched with the corresponding pipette head (13); and
a plurality of permanent magnet rods (32), each arranged on the other end of the corresponding connecting sleeve (31).

10. The multifunctional pipette (42) according to any of claims 1-8, wherein the magnetic module (3) comprises:
a fixed base (33), comprising the second joint part (331) and a second surface (332) opposite to each other, the second joint part (331) has a plurality of second recessed parts (3311), the plurality of second recessed parts (3311) opposite to the plurality of pipette heads (13), and each of the plurality of second recessed parts (3311) is matched with the corresponding pipette head (13); and
a plurality of permanent magnet rods (34), running through the second surface (332), wherein the plurality of permanent magnet rods (34) are respectively aligned with the plurality of second recessed parts (3311).

11. The multifunctional pipette (42) according to any of claims 3-8, wherein the magnetic module (3) comprises:
a plurality of second recessed parts (351), wherein the plurality of second recessed parts (351) are located at the second joint part (3521), the plurality of second recessed parts (351) opposite to the plurality of pipette heads (13), and each of the plurality of second recessed parts (351) is matched with the corresponding pipette head (13);
a plurality of power supply terminals (14), arranged on the pipette shell (11);
a plurality of electromagnet rods (36), arranged opposite to the second joint part (3521), wherein the plurality of electromagnet rods (36) are respectively aligned with the plurality of second recessed parts (351); and
a plurality of second connecting terminals (37), respectively corresponding to the plurality of power supply terminals (14) and electrically connected to the plurality of electromagnet rods (36), wherein the plurality of second connecting terminals (37) and the second joint part (3521) face the same direction;
wherein when the magnetic module (3) accommodates one of the plurality of pipette heads (13) through at least one of the plurality of second recessed parts (351), the plurality of second connecting terminals (37) are respectively electrically connected to the plurality of power supply terminals (14).

12. The multifunctional pipette (42) according to any of claims 3-8, wherein the magnetic module (3) comprises:
a plurality of second recessed parts (351), wherein the plurality of second recessed parts (351) are located at the second joint part (3521), the plurality of second recessed parts (351) opposite to the plurality of pipette heads (13), and each of the plurality of second recessed parts (351) is matched with the corresponding pipette head (13);
a plurality of power supply terminals (14), arranged on the pipette shell (11);
a plurality of electromagnet rods (36), arranged opposite to the second joint part (3521), wherein the plurality of electromagnet rods (36) are respectively aligned with the plurality of second recessed parts (351);
a plurality of second connecting terminals (37), respectively corresponding to the plurality of power supply terminals (14) and electrically connected to the plurality of electromagnet rods (36), wherein the plurality of second connecting terminals (37) and the second joint part (3521) face the same direction; and
a connecting shell (35), further comprising:
a fixed base (352), comprising a first surface, a second surface (3522), a third surface (3523) and a fourth surface (3524), wherein the first surface is the second joint part (3521), the second joint part (3521) and the second surface (3522) opposite to each other, the third surface (3523) and the fourth surface (3524) connected between the second joint part (3521) and the second surface (3522), and the plurality of electromagnet rods (36) run through the second surface (3522); and
at least two extending arms (353), wherein one end of at least one of the plurality of extending arms (353) is connected to the third surface (3523), one end of at least another one of the plurality of extending arms (353) is connected to the fourth surface (3524), and the other end of each of the plurality of extending arms (353) faces the same direction as the second joint part (3521), wherein plurality of the second connecting terminals (37) are respectively located at end surfaces of the other ends of the plurality of extending arms (353).

13. The multifunctional pipette (42) according to any of claims 2-12, wherein the pipette module (1) further comprises:
a linear guide rail (15);
a linkage element (16), connecting the linear guide rail (15) with the piston assemblies (12) and configured to drive the plurality of piston assemblies (12) to reciprocate along the linear guide rail (15); and
a limit assembly (17), connected to the linkage element (16) and configured to limit a moving distance of the linkage element (16).

14. The multifunctional pipette (42) according to any of claims 1-13, wherein the pipette module (1) further comprises:
an exit structure (19), located beside the plurality of pipette heads (13), wherein the exit structure (19) further comprising:
a plurality of perforations (191), provided in the exit structure (19), wherein the plurality of perforations (191) respectively surround the plurality of pipette heads (13).

15. An automatic detection machine (4), comprising:
a detection platform (41), having a plurality of working areas (411);
a multifunctional pipette (42) according to any of the preceding claims;
a moving mechanism (43), connected to the multifunctional pipette (42) and configured to drive the multifunctional pipette (42) to move between the working areas (411); and
a receiving base (44), located in one of the plurality of working areas (411) and configured to receive the heater module (2) or the magnetic module (3).

## Amended claims

### Amended claims in accordance with Rule 137(2) EPC.

1. A multifunctional pipette (42) configured to couple with micropipette tips (5), the multifunctional pipette (42) is **characterized by** comprising:
a pipette module (1), having a plurality of pipette heads (13), configured to couple with the micropipette tips (5);
a heater module (2), having a first joint part (2121), the heater module (2) configured to replace the micropipette tips (5) coupled with the plurality of pipette heads (13) by coupling the first joint part (2121) to at least one of the plurality of pipette heads (13); and
a magnetic module (3), having a second joint part (311; 331; 3521), the magnetic module (3) configured to replace the micropipette tips (5) coupled with the plurality of pipette heads (13) by coupling the second joint part (311; 331; 3521) to at least one of the plurality of pipette heads (13).

2. The multifunctional pipette (42) according to claim 1, **characterized in that** the pipette module (1) further comprises:
a plurality of piston assemblies (12), comprising a plurality of air channels (122) and a plurality of piston rods (123);
wherein one end of each of the plurality of air channels (122) has an opening (121);
wherein each of the plurality of piston rods (123) is inserted into each of the air channels (122) from the other end of each of the plurality of air channels (122) and is removable in axially reciprocating manner in the corresponding air channel (122);
wherein each of the piston assemblies (12) is coupled to the corresponding pipette head (13) via the opening (121).

3. The multifunctional pipette (42) according to claim 2, **characterized in that** the pipette module (1) further comprises:
a pipette shell (11), wherein the plurality of piston assemblies (12) are located in the pipette shell (11), the openings (121) of the plurality of piston assemblies (12) are arranged close to one side of the pipette shell (11), and the pipette heads (13) are fixedly arranged on the pipette shell (11); and
a motor (18), arranged at one side of the pipette shell (11) and configured to drive the plurality of piston assemblies (12).

4. The multifunctional pipette (42) according to claim 3, **characterized in that** the first joint part (2121) has a plurality of first recessed parts (211) opposite to the pipette heads (13), and each of the plurality of first recessed parts (211) is matched with the corresponding pipette head (13).

5. The multifunctional pipette (42) according to any of claims 3-4, **characterized in that** the pipette module (1) further comprises:
a plurality of power supply terminals (14), arranged on the pipette shell (11); and
the heater module (2) further comprises:
a plurality of heating rods (22); and
a plurality of first connecting terminals (23), respectively corresponding to the plurality of power supply terminals (14) and electrically connected to the plurality of heating rods (22).

6. The multifunctional pipette (42) according to claim 5, **characterized in that** the heater module (2) is configured to accommodate one of the plurality of pipette heads (13) through at least one of the plurality of first recessed parts (211) and to be respectively electrically connected to the plurality of power supply terminals (14) through the plurality of first connecting terminals (23).

7. The multifunctional pipette (42) according to any of claims 5-6, **characterized in that** the heater module (2) further comprises a heat-resistant shell (21), the first joint part (2121) is located on one side of the heat-resistant shell (21), the plurality of heating rods (22) are arranged opposite to the first joint part (2121), the plurality of first connecting terminals (23) are embedded in the heat-resistant shell (21), and the plurality of first connecting terminals (23) and the first joint part (2121) face the same direction.

8. The multifunctional pipette (42) according to claim 7, **characterized in that** the heat-resistant shell (21) comprises:
a fixed base (212), comprising a first surface, a second surface (2122), a third surface (2123) and a fourth surface (2124), wherein the first surface is the first joint part (2121), the first joint part (2121) and the second surface (2122) opposite to each other, the third surface (2123) and the fourth surface (2124) connected between the first joint part (2121) and the second surface (2122), the plurality of heating rods (22) run through the second surface (2122), and the plurality of heating rods (22) are respectively aligned with the plurality of first recessed parts (211); and
at least two extending arms (213), wherein one end of at least one of the plurality of extending arms (213) is connected to the third surface (2123), one end of at least another one of the plurality of extending arms (213) is connected to the fourth surface (2124), and the other end of each of the plurality of extending arms (213) faces the same direction as the first joint part (2121), and the plurality of first connecting terminals (23) are respectively located at end surfaces of the other ends of the plurality of extending arms (213).

9. The multifunctional pipette (42) according to any of claims 1-8, **characterized in that** the magnetic module (3) comprises:
a plurality of connecting sleeves (31), having the second joint part (311), wherein the second joint part (311) comprises a plurality of sleeve recessed parts (3111), the plurality of sleeve recessed parts (3111) are respectively located at one ends of the plurality of connecting sleeves (31), the plurality of sleeve recessed parts (3111) opposite to the plurality of pipette heads (13), and each of the plurality of sleeve recessed parts (3111) is matched with the corresponding pipette head (13); and
a plurality of permanent magnet rods (32), each arranged on the other end of the corresponding connecting sleeve (31).

10. The multifunctional pipette (42) according to any of claims 1-8, **characterized in that** the magnetic module (3) comprises:
a fixed base (33), comprising the second joint part (331) and a second surface (332) opposite to each other, the second joint part (331) has a plurality of second recessed parts (3311), the plurality of second recessed parts (3311) opposite to the plurality of pipette heads (13), and each of the plurality of second recessed parts (3311) is matched with the corresponding pipette head (13); and
a plurality of permanent magnet rods (34), running through the second surface (332), wherein the plurality of permanent magnet rods (34) are respectively aligned with the plurality of second recessed parts (3311).

11. The multifunctional pipette (42) according to any of claims 3-8, **characterized in that** the pipette module (1) further comprises:
a plurality of power supply terminals (14), arranged on the pipette shell (11); and
the magnetic module (3) comprises:
a plurality of second recessed parts (351), wherein the plurality of second recessed parts (351) are located at the second joint part (3521), the plurality of second recessed parts (351) opposite to the plurality of pipette heads (13), and each of the plurality of second recessed parts (351) is matched with the corresponding pipette head (13);
a plurality of electromagnet rods (36), arranged opposite to the second joint part (3521), wherein the plurality of electromagnet rods (36) are respectively aligned with the plurality of second recessed parts (351); and
a plurality of second connecting terminals (37), respectively corresponding to the plurality of power supply terminals (14) and electrically connected to the plurality of electromagnet rods (36), wherein the plurality of second connecting terminals (37) and the second joint part (3521) face the same direction;
wherein when the magnetic module (3) accommodates one of the plurality of pipette heads (13) through at least one of the plurality of second recessed parts (351), the plurality of second connecting terminals (37) are respectively electrically connected to the plurality of power supply terminals (14).

12. The multifunctional pipette (42) according to any of claims 3-8, **characterized in that** the pipette module (1) further comprises:
a plurality of power supply terminals (14), arranged on the pipette shell (11); and
the magnetic module (3) comprises:
a plurality of second recessed parts (351), wherein the plurality of second recessed parts (351) are located at the second joint part (3521), the plurality of second recessed parts (351) opposite to the plurality of pipette heads (13), and each of the plurality of second recessed parts (351) is matched with the corresponding pipette head (13);
a plurality of electromagnet rods (36), arranged opposite to the second joint part (3521), wherein the plurality of electromagnet rods (36) are respectively aligned with the plurality of second recessed parts (351);
a plurality of second connecting terminals (37), respectively corresponding to the plurality of power supply terminals (14) and electrically connected to the plurality of electromagnet rods (36), wherein the plurality of second connecting terminals (37) and the second joint part (3521) face the same direction; and
a connecting shell (35), further comprising:
a fixed base (352), comprising a first surface, a second surface (3522), a third surface (3523) and a fourth surface (3524), wherein the first surface is the second joint part (3521), the second joint part (3521) and the second surface (3522) opposite to each other, the third surface (3523) and the fourth surface (3524) connected between the second joint part (3521) and the second surface (3522), and the plurality of electromagnet rods (36) run through the second surface (3522); and
at least two extending arms (353), wherein one end of at least one of the plurality of extending arms (353) is connected to the third surface (3523), one end of at least another one of the plurality of extending arms (353) is connected to the fourth surface (3524), and the other end of each of the plurality of extending arms (353) faces the same direction as the second joint part (3521), wherein plurality of the second connecting terminals (37) are respectively located at end surfaces of the other ends of the plurality of extending arms (353).

13. The multifunctional pipette (42) according to any of claims 2-12, **characterized in that** the pipette module (1) further comprises:
a linear guide rail (15);
a linkage element (16), connecting the linear guide rail (15) with the piston assemblies (12) and configured to drive the plurality of piston assemblies (12) to reciprocate along the linear guide rail (15); and
a limit assembly (17), connected to the linkage element (16) and configured to limit a moving distance of the linkage element (16).

14. The multifunctional pipette (42) according to any of claims 1-13, **characterized in that** the pipette module (1) further comprises:
an exit structure (19), located beside the plurality of pipette heads (13), wherein the exit structure (19) further comprising:
a plurality of perforations (191), provided in the exit structure (19), wherein the plurality of perforations (191) respectively surround the plurality of pipette heads (13).

15. An automatic detection machine (4), **characterized by** comprising:
a detection platform (41), having a plurality of working areas (411);
a multifunctional pipette (42) according to any of the preceding claims;
a moving mechanism (43), connected to the multifunctional pipette (42) and configured to drive the multifunctional pipette (42) to move between the working areas (411); and
a receiving base (44), located in one of the plurality of working areas (411) and configured to receive the heater module (2) or the magnetic module (3).
